# EUROPEAN PATENT APPLICATION

(11) **EP 3 972 115 A1**
(43) Date of publication of application: **23.03.2022**
(21) Application number: 19929105.5
(22) Date of filing: 13.05.2019
(51) Int. Cl.: H02P 5/46

(54) **LOAD DRIVE DEVICE, AIR CONDITIONER, AND METHOD FOR OPERATING LOAD DRIVE DEVICE**

(71) Applicant: MITSUBISHI ELECTRIC CORPORATION, Chiyoda-ku Tokyo 100-8310 (JP)
(72) Inventor: SHIMIZU, Yuichi, Tokyo 100-8310 (JP); TANIYAMA, Yuki, Tokyo 100-8310 (JP); WADA, Yasuhiko, Tokyo 100-8310 (JP)
(74) Representative: Pfenning, Meinig & Partner mbB
(86) International application number: PCT/JP2019/018942
(87) International publication number: WO 2020/230235

(57) **Abstract**

A load driving apparatus includes first and second motors (41, 42) that drive a plurality of loads on a one-to-one basis, and an inverter (4) that applies a common voltage to the first and second motors (41, 42). The first motor (41) is vector-controlled by a control unit (10). The second motor (42) is driven by the common voltage. The ratio of the winding resistance value of the second motor (42) to the winding resistance value of the first motor (41) as a reference motor is 2.4 or more.

## Description

### Field

The present invention relates to a load driving apparatus including motors that drive a plurality of loads on a one-to-one basis, the load driving apparatus being configured to drive every motor with one inverter, and to an air conditioner including a load driving apparatus and a method for operating a load driving apparatus.

### Background

When a motor provided in a load driving apparatus is a permanent magnet synchronous motor, for example, position information of the rotor is required to drive the permanent magnet synchronous motor. Therefore, in general, permanent magnet synchronous motors are driven using a position sensor for acquiring the rotor position. However, the use of position sensors causes problems such as an increase in system size, an increase in cost, and a decrease in environmental resistance. Therefore, permanent magnet synchronous motors need to be driven by applying sensorless control that drives permanent magnet synchronous motors without using a position sensor.

In position sensorless control, the error between the estimated position value of the motor rotor and the actual rotor position may increase due to factors such as an excessive load on the motor. In this case, an appropriate current cannot be applied to the motor, and the motor may stop. Such a phenomenon is called "step-out".

Patent Literature 1 below relates to driving a plurality of motors with one inverter, and discloses a technique of detecting step-out based on the combined current of the motors. Specifically, in Patent Literature 1, a plurality of motors are grouped in units of two or three motors. The combined current of the motors is detected by a current sensor connected to each output line of one or two phases out of the output lines connected to each motor in the group, with the current sensor connected such that the output lines have phases different from each other.

### Citation List

### Patent Literature

Patent Literature 1: Japanese Patent Application Laid-open No. 2010-022184

### Summary

### Technical Problem

However, the above-described conventional technique is problematic in that the connection form of the current sensor for detecting the combined current is complicated, and it is necessary to place the current sensor across the output lines of different motors, causing an increase in apparatus size and making control complicated. For this reason, there is a demand for a load driving apparatus capable of stably driving a plurality of motors with reducing or preventing an increase in apparatus size or complicated control.

The present invention has been made in view of the above, and an object thereof is to obtain a load driving apparatus configured to perform position sensorless drive of a plurality of motors with one inverter and capable of stably driving the plurality of motors with reducing or preventing an increase in apparatus size or complicated control.

### Solution to Problem

In order to solve the above-described problems and achieve the object, a load driving apparatus according to the present invention includes: a plurality of motors each of which driving a corresponding one of a plurality of loads; a single inverter that applies a common voltage to the plurality of the motors; and a control unit that performs vector control on a first motor which is one of the plurality of the motors and is a reference motor. A second motor which is other than the first motor is driven by the common voltage. A first ratio is 2.4 times or more, the first ratio being a ratio of a winding resistance value of the second motor to a winding resistance value of the first motor.

### Advantageous Effects of Invention

The load driving apparatus according to the present invention is configured to perform position sensorless drive of a plurality of motors with one inverter and can achieve the effect of stably driving the plurality of motors with reducing or preventing an increase in apparatus size or complicated control.

### Brief Description of Drawings

FIG. 1 is a diagram illustrating an exemplary configuration of a load driving apparatus according to a first embodiment.
FIG. 2 is a diagram illustrating an example of application of a load driving apparatus to an air conditioner according to the first embodiment.
FIG. 3 is a block diagram illustrating an exemplary configuration of a control system constructed in the control unit of FIG. 1.
FIG. 4 is a diagram for explaining the operation of the pulse width modulation (hereinafter referred to as "PWM") signal generation unit illustrated in FIG. 3.
FIG. 5 is a block diagram illustrating an example of a hardware configuration for implementing the function of the control system illustrated in FIG. 3.
FIG. 6 is a block diagram illustrating another example of a hardware configuration for implementing the function of the control system illustrated in FIG. 3.
FIG. 7 is a first diagram illustrating a pulsation phenomenon of a second motor that can occur in the load driving apparatus having the configuration illustrated in FIG. 1.
FIG. 8 is a diagram for explaining the behavior of the load driving apparatus according to the first embodiment.
FIG. 9 is a second diagram illustrating a pulsation phenomenon of the second motor that can occur in the load driving apparatus having the configuration illustrated in FIG. 1.
FIG. 10 is a first diagram for explaining operation parameters for stabilizing the operation of the load driving apparatus according to the first embodiment.
FIG. 11 is a second diagram for explaining operation parameters for stabilizing the operation of the load driving apparatus according to the first embodiment.
FIG. 12 is a diagram for explaining the behavior of a load driving apparatus according to a second embodiment.
FIG. 13 is a third diagram illustrating a pulsation phenomenon of the second motor that can occur in the load driving apparatus having the configuration illustrated in FIG. 1.
FIG. 14 is a first diagram for explaining operation parameters for stabilizing the operation of the load driving apparatus according to the second embodiment.
FIG. 15 is a second diagram for explaining operation parameters for stabilizing the operation of the load driving apparatus according to the second embodiment.
FIG. 16 is a diagram for explaining the behavior of a load driving apparatus according to a third embodiment.
FIG. 17 is a fourth diagram illustrating a pulsation phenomenon of the second motor that can occur in the load driving apparatus having the configuration illustrated in FIG. 1.
FIG. 18 is a first diagram for explaining operation parameters for stabilizing the operation of the load driving apparatus according to the third embodiment.
FIG. 19 is a second diagram for explaining operation parameters for stabilizing the operation of the load driving apparatus according to the third embodiment.
FIG. 20 is a diagram illustrating an exemplary configuration of a load driving apparatus according to a fourth embodiment.
FIG. 21 is a diagram illustrating an exemplary configuration of a load driving apparatus according to a fifth embodiment.
FIG. 22 is a flowchart for explaining a method for operating the load driving apparatus according to the fifth embodiment.

### Description of Embodiments

Hereinafter, a load driving apparatus, an air conditioner, and a method for operating a load driving apparatus according to embodiments of the present invention will be described with reference to the accompanying drawings. The present invention is not limited to the following embodiments.

### First Embodiment.

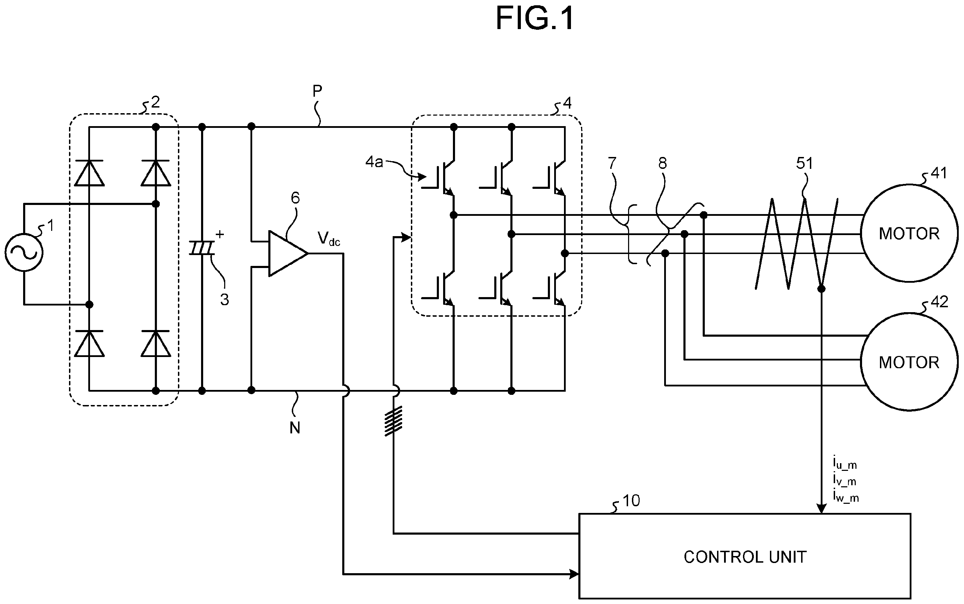

FIG. 1 is a diagram illustrating an exemplary configuration of a load driving apparatus according to the first embodiment. The load driving apparatus according to the first embodiment is an apparatus that drives each of a plurality of loads (not illustrated in FIG. 1). The two motors in FIG. 1: a first motor 41 and a second motor 42, are examples of a plurality of motors that drive a plurality of loads on a one-to-one basis.

As illustrated in FIG. 1, the load driving apparatus according to the first embodiment includes an inverter 4 and a smoothing unit 3. The inverter 4 is a single power conversion device that applies a common voltage to each of the first motor 41 and the second motor 42. The smoothing unit 3 operates as a DC power supply for supplying a DC voltage to the inverter 4. An example of the smoothing unit 3 is a capacitor. The inverter 4 is connected in parallel to the output side of the smoothing unit 3. The inverter 4 is a three-phase inverter and includes six switching elements 4a. In the inverter 4, the six switching elements 4a are bridge-connected to form the main circuit of the inverter 4.

An example of the switching element 4a is an insulated gate bipolar transistor (IGBT) as illustrated in the figure, but other switching elements may be used. Another example of the switching element 4a is a metal oxide semiconductor field effect transistor (MOSFET). A rectifier 2 is connected in parallel to the input side of the smoothing unit 3. The rectifier 2 includes four diodes that are bridge-connected. AC power from an AC power supply 1 is supplied to the rectifier 2. AC power from the AC power supply 1 is rectified by the rectifier 2 and then smoothed by the smoothing unit 3, and the smoothed DC power is supplied to the inverter 4.

Note that the AC power supply 1 and the rectifier 2 illustrated in FIG. 1 are of single-phase type, but may be of three-phase type. In addition, as the capacitor of the smoothing unit 3, an aluminum electrolytic capacitor is generally used because of its large capacitance, but a long-life film capacitor may be used. Alternatively, a capacitor with a small capacitance may be used. The use of a capacitor with a small capacitance leads to a reduction in the harmonic current in the current flowing through the AC power supply 1. Further, a reactor may be inserted in the electrical wiring between the AC power supply 1 and the smoothing unit 3 for the purpose of reducing the harmonic current or improving the power factor.

The inverter 4 includes three legs of three phases, each consisting of an upper-arm switching element and a lower-arm switching element connected in series in this order. The three legs are a U-phase leg, a V-phase leg, and a W-phase leg. The U-phase leg, the V-phase leg, and the W-phase leg are connected in parallel between the P line and the N line, which are DC bus lines to which DC power is supplied.

A power line 7 is drawn from the connection end between an upper-arm switching element and a lower-arm switching element. The power line 7 is divided into two at a branch point 8, and the two lines are connected one-to-one to the first motor 41 and the second motor 42. The first motor 41 and the second motor 42 may be a three-phase permanent magnet synchronous motor, which is a non-limiting example. The first motor 41 and the second motor 42 may be any motors as long as the first motor 41 and the second motor 42 are the same type of motors. For example, if the first motor 41 is an induction motor, the second motor 42 is also an induction motor. Although FIG. 1 depicts a configuration having two motors, there may be three or more motors. When the number of motors is n (n is an integer of two or more), a single reference motor is the first motor 41, and the remaining (n-1) motors are the second motors 42. Hereinafter, the reference first motor 41 may be referred to as the "reference motor".

The DC power smoothed by the smoothing unit 3 is supplied to the inverter 4, and then converted into a desired three-phase AC power by the inverter 4. The three-phase AC power obtained through conversion is supplied to the first motor 41 and the second motor 42.

Although FIG. 1 depicts a configuration in which each leg of the inverter 4 has only switching elements, the present disclosure is not limited to this configuration. For the purpose of reducing the surge voltage generated by the switching operation of a switching element, a freewheeling diode may be connected in antiparallel to the two ends of the switching element. In a case where a switching element is a MOSFET, the parasitic diode of the MOSFET may be used as a freewheeling diode. Further, in a case where a switching element is a MOSFET, the reflux function can be implemented with the switching element alone by turning on the MOSFET at the timing of refluxing. Moreover, materials for a switching element may include not only silicon (Si) but also silicon carbide (SiC), gallium nitride (GaN), gallium oxide (Ga₂O₃), diamond, and the like, which are wide bandgap semiconductors. Forming a switching element from a wide bandgap semiconductor material contributes to achieving low loss and high-speed switching.

Next, the sensors required for controlling the inverter 4 will be described. In FIG. 1, a current detection unit 51 is a current sensor that detects the three-phase motor current flowing through the first motor 41. An input voltage detection unit 6 is a bus voltage sensor that detects a DC bus voltage V_{dc}, i.e. the voltage between the P line and the N line, which are DC bus lines.

A control unit 10 controls the rotation speed or rotation torque of the first motor 41. Motor control calculation is performed based on motor currents i_{u_m}, i_{v_m}, and i_{w_m} detected by the current detection unit 51 and the DC bus voltage V_{dc} detected by the input voltage detection unit 6, and a drive signal for each switching element of the inverter 4 is generated.

The control unit 10 performs known vector control. Vector control is a control method in which detection values of three-phase currents in a stationary coordinate system are decomposed for control into a d-axis current id and a q-axis current iq, i.e. currents in an orthogonal biaxial rotating coordinate system.

As described above, the first motor 41, which is the reference motor, is vector-controlled by the control unit 10. On the other hand, the second motor 42, which is not the reference motor, is driven by the common voltage output from the inverter 4. The control unit 10 does not directly control the second motor 42.

The current detection unit is exemplified by, but not limited to, current transformers. Instead of using current transformers, a method of detecting a motor current from the voltage across a resistor may be adopted. In addition, the current detection unit 51 may adopt a configuration in which a resistor for current detection is provided between each of the lower-arm switching elements of the inverter 4 and the connection point of the three lower-arm switching elements, or a configuration in which a resistor for current detection is provided between the connection point of the three lower-arm switching elements and the connection point with the N line, which is the negative DC bus line, to which the capacitor is connected.

Although the number of inverters is one in FIG. 1, a plurality of inverters may be provided. Each of the plurality of inverters uses the P line and the N line, which are DC bus lines, as common bus lines, and is connected between the P line and the N line, namely the common bus lines. In addition, at least two motors are connected to each of the plurality of inverters.

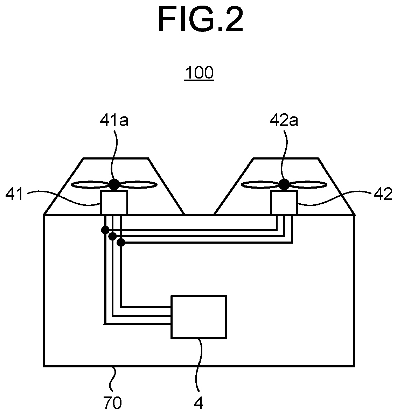

FIG. 2 is a diagram illustrating an example of application of the load driving apparatus to an air conditioner according to the first embodiment. In FIG. 2, an outdoor unit 70 of the air conditioner 100 is equipped with the inverter 4, a plurality of fans 41a and 42a that are examples of loads, and the first motor 41 and the second motor 42 for driving the fans 41a and 42a. In the case of driving the two fans 41a and 42a in the air conditioner 100, the number of inverters 4 can be reduced by operating the two motors, namely the first motor 41 and the second motor 42, with the one inverter 4. As a result, the cost of the air conditioner 100 can be reduced.

Note that the case of FIG. 2, in which the load driving apparatus illustrated in FIG. 1 is applied to the air conditioner 100, is a non-limiting example. The load driving apparatus illustrated in FIG. 1 may be applied to refrigeration cycle equipment such as heat pump water heaters, refrigerators, and freezers.

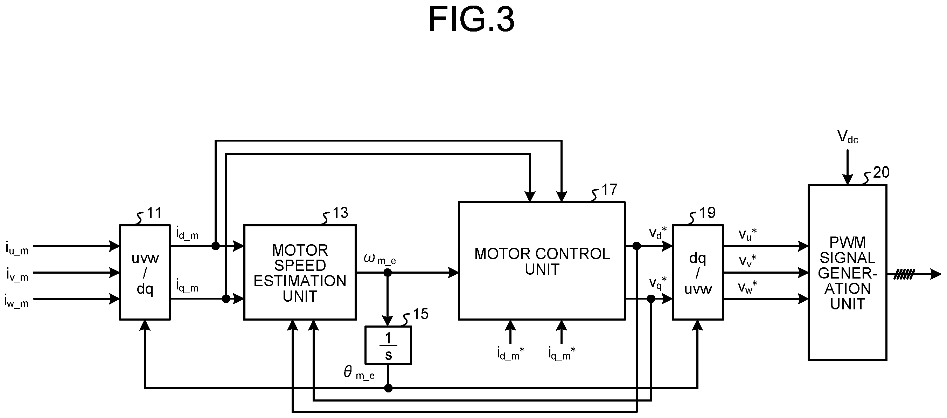

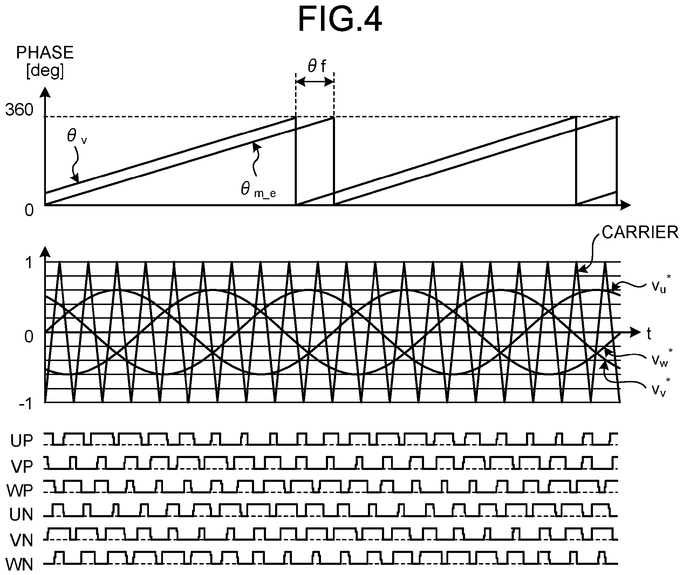

FIG. 3 is a block diagram illustrating an exemplary configuration of a controller system constructed in the control unit 10 of FIG. 1. FIG. 4 is a diagram for explaining the operation of a PWM signal generation unit 20 illustrated in FIG. 3.

The control unit 10 includes a coordinate conversion unit (denoted as "uvw/dq" in FIG. 3) 11, a motor speed estimation unit 13, an integrator 15, a motor control unit 17, a coordinate conversion unit (denoted as "dq/uvw" in FIG. 3) 19, and the PWM signal generation unit 20.

Next, the operation of each component of the control unit 10 will be described. First, the coordinate conversion unit 11 receives input of the motor currents i_{u_m}, i_{v_m}, and i_{w_m}, which are the current values of the stationary three-phase coordinate system detected by the current detection unit 51. The coordinate conversion unit 11 converts the motor currents i_{u_m}, i_{v_m}, and i_{w_m} into motor dq-axis currents i_{d_m} and i_{q_m} using a motor phase estimated value θ_{m_e} described later. Here, the motor dq-axis currents i_{d_m} and i_{q_m} are current values of the rotating two-phase coordinate system in the first motor 41. The motor dq-axis currents i_{d_m} and i_{q_m} obtained through conversion by the coordinate conversion unit 11 are input to the motor speed estimation unit 13 and the motor control unit 17.

The motor speed estimation unit 13 estimates a motor speed estimated value ω_{m_e} based on the motor dq-axis currents i_{d_m} and i_{q_m}. The integrator 15 calculates the motor phase estimated value θ_{m_e} by integrating the motor speed estimated value ω_{m_e}. The calculated motor phase estimated value θ_{m_e} is input to the coordinate conversion units 11 and 19 for coordinate conversion of current values and coordinate conversion of voltage command values.

Note that the method for calculating motor speed estimated values and motor phase estimated values is known, and a detailed description thereof is omitted here. For details of the method for calculating each estimated value, refer to Japanese Patent No. 4672236, for example. The contents of this publication are incorporated in the present specification and form a part of the present specification. In addition, the method for calculating each estimated value is not limited to the contents of the publication, and any method may be used as long as estimated values of motor speed and motor phase can be obtained. Moreover, any information may be used in calculations as long as estimated values of motor speed and motor phase can be obtained, and the information described here may be omitted, or other information may be used.

The motor control unit 17 calculates dq-axis voltage command values v_{d}* and v_{q}* based on the motor dq-axis currents i_{d_m} and i_{q_m} and the motor speed estimated value ω_{m_e}. The dq-axis voltage command values v_{d}* and v_{q}* can be calculated by proportional integral control of the difference between the motor dq-axis currents i_{d_m} and i_{q_m} and dq-axis current command values i_{d_m}* and i_{q_m}*. Note that any method may be used as long as the same function can be implemented.

The coordinate conversion unit 19 converts the dq-axis voltage command values v_{d}* and v_{q}* of the rotating two-phase coordinate system in the first motor 41 into voltage command values vᵤ*, vᵥ*, and v_{w}* of the stationary three-phase coordinate system, based on a voltage phase θᵥ which is obtained based on the motor phase estimated value θ_{m_e} and the dq-axis voltage command values v_{d}* and v_{q}*. The voltage phase θᵥ is the phase angle of the voltage command values in the rotating two-phase coordinate system. The upper part of FIG. 4 depicts the relationship between the motor phase estimated value θ_{m_e}, a phase difference θ_{f} by phase control, and the voltage phase θᵥ. As illustrated in the upper part of FIG. 4, the voltage phase θᵥ, the motor phase estimated value θ_{m_e}, and the phase difference θ_{f} have the relationship of θᵥ=θ_{m_e}-θ_{f}.

The PWM signal generation unit 20 generates PWM signals for PWM control of the switching elements of the inverter 4 based on the voltage command values vᵤ*, vᵥ*, and v_{w}* and the DC bus voltage V_{dc}. The lower part of FIG. 4 depicts an example of PWM signals. UP is a PWM signal for controlling the upper-arm switching element of the U phase of the inverter 4, and UN is a PWM signal for controlling the lower-arm switching element of the U phase of the inverter 4. Similarly, VP and VN are PWM signals for controlling the upper-arm switching element of the V phase and the lower-arm switching element of the V phase, respectively, and WP and WN are PWM signals for controlling the upper-arm switching element of the W phase and the lower-arm switching element of the W phase, respectively. As illustrated in the middle part of FIG. 4, these PWM signals can be generated based on the magnitude relationship between the three-phase voltage command values vᵤ*, vᵥ*, and v_{w}* and the carrier.

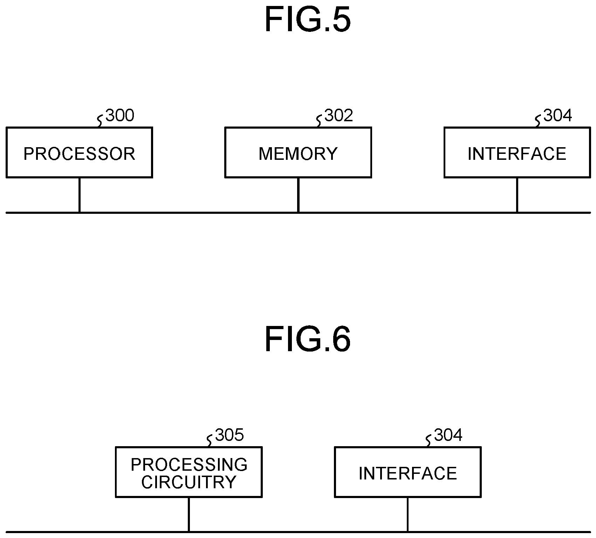

FIG. 5 is a block diagram illustrating an example of a hardware configuration for implementing the function of the control system illustrated in FIG. 3. FIG. 6 is a block diagram illustrating another example of a hardware configuration for implementing the function of the control system illustrated in FIG. 3.

The function of the control system illustrated in FIG. 3 can be implemented with a configuration including a processor 300, a memory 302, and an interface 304 as illustrated in FIG. 5. The processor 300 performs calculation. Programs that are read by the processor 300 are saved in the memory 302. Signals are input and output through the interface 304.

The processor 300 may be a calculation means such as a calculation device, a microcomputer, a microcomputer, a central processing unit (CPU), or a digital signal processor (DSP). Examples of the memory 302 include nonvolatile or volatile semiconductor memories such as a random access memory (RAM), a read only memory (ROM), a flash memory, an erasable programmable ROM (EPROM), and an electrically EPROM (EEPROM, registered trademark).

Specifically, the memory 302 stores a program that executes the function of motor control in the control unit 10. Necessary information is sent and received via the interface 304, the processor 300 executes the program stored in the memory 302, and the processor 300 refers to a table stored in the memory 302, whereby the processor 300 can execute the motor control described below. The calculation result by the processor 300 can be stored in the memory 302.

The processor 300 and the memory 302 illustrated in FIG. 5 may be replaced with processing circuitry 305 as illustrated in FIG. 6. For example, the processing circuitry 305 is a single circuit, a composite circuit, an application specific integrated circuit (ASIC), a field-programmable gate array (FPGA), or a combination thereof. Information can be input to the processing circuitry 305 or output from the processing circuitry 305 via the interface 304.

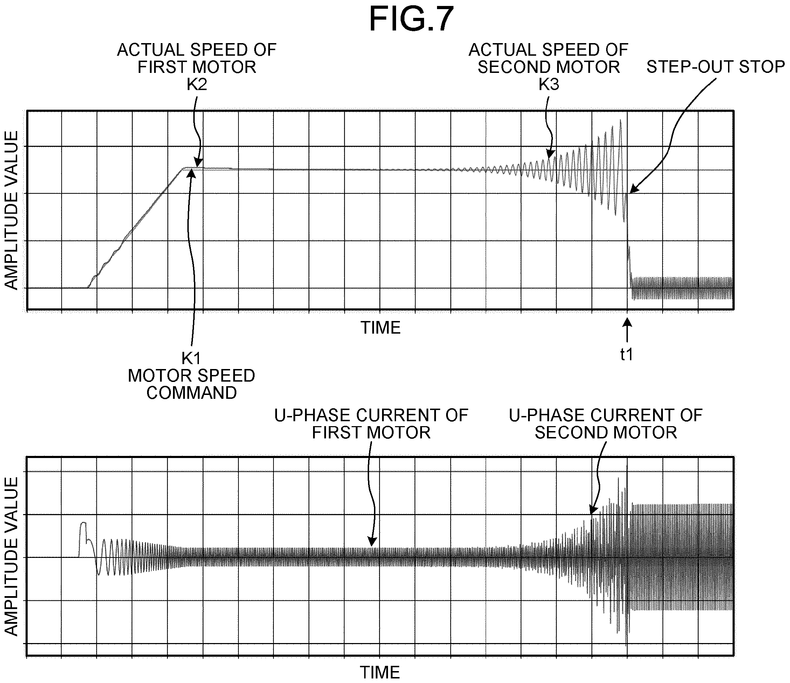

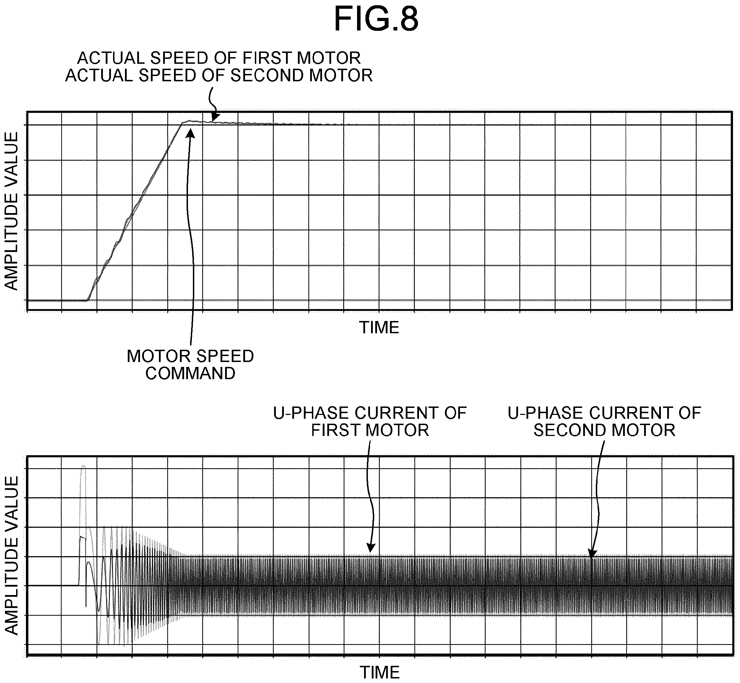

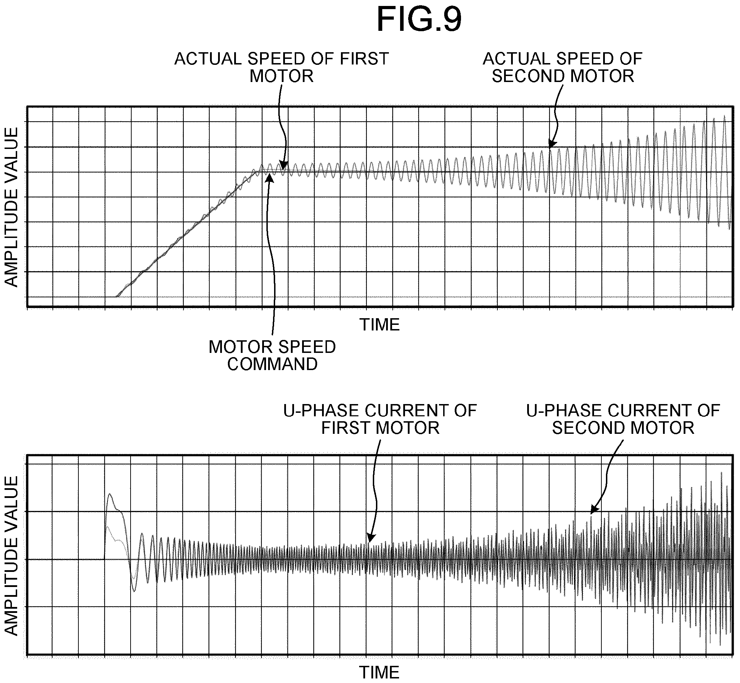

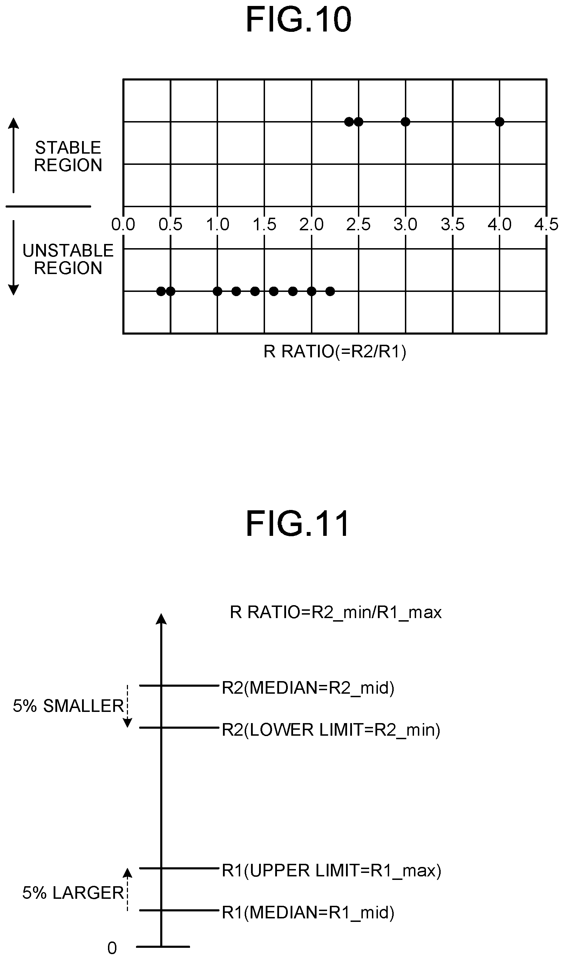

Next, the configuration of the main part of the load driving apparatus according to the first embodiment will be described with reference to FIGS. 7 to 11. FIG. 7 is a first diagram illustrating a pulsation phenomenon of the second motor that can occur in the load driving apparatus having the configuration illustrated in FIG. 1. FIG. 8 is a diagram for explaining the behavior of the load driving apparatus according to the first embodiment. FIG. 9 is a second diagram illustrating a pulsation phenomenon of the second motor that can occur in the load driving apparatus having the configuration illustrated in FIG. 1. FIG. 10 is a first diagram for explaining operation parameters for stabilizing the operation of the load driving apparatus according to the first embodiment. FIG. 11 is a second diagram for explaining operation parameters for stabilizing the operation of the load driving apparatus according to the first embodiment. Note that the operation waveforms illustrated in FIGS. 7 to 10 indicate simulation results obtained by using a motor model that simulates permanent magnet synchronous motors assuming that the first motor 41 and the second motor 42 are permanent magnet synchronous motors. The same applies to the second and subsequent embodiments.

In the upper part of FIG. 7, a waveform K1 is the motor speed command given to the first motor 41. A waveform K2 is the actual speed of the first motor 41 driven by the motor speed command. A waveform K3 is the actual speed of the second motor 42 driven by the common voltage output from the inverter 4. In addition, in the lower part of FIG. 7, a waveform K4 is the current flowing through the U phase of the first motor 41 (hereinafter referred to as "U-phase current"), and a waveform K5 is the U-phase current of the second motor 42.

Motors that are widely used for outdoor unit fans of air conditioners have a winding resistance value of about several hundred [mΩ], for example. Winding resistance value is a type of motor physical constant. FIG. 7 illustrates various waveform examples in the case that the winding resistance values of the first motor 41 and the second motor 42 are the same. In FIG. 7, the first motor 41 operates following the motor speed command, whereas the second motor 42 operates unstably because of the occurrence of a pulsation phenomenon, and has great fluctuations in both actual speed and U-phase current. Then, the second motor 42 is stopped due to step-out at time t1.

In contrast to FIG. 7, FIG. 8 illustrates operation waveforms in the case that the winding resistance value of the second motor 42 is set to 2.5 times the winding resistance value of the first motor 41. In FIG. 8, neither the first motor 41 nor the second motor 42 has pulsations in actual speed and U-phase current. Comparison with FIG. 7 more clearly shows that the operation is stable.

FIG. 9 illustrates operation waveforms in the case that the winding resistance value of the second motor 42 is set to 0.4 times the winding resistance value of the first motor 41. In FIG. 9, the first motor 41 operates following the motor speed command, whereas the second motor 42 has a pulsation phenomenon. In addition, the pulsations of speed and current occur during acceleration after the motor is started, which means that the operation is less stable than that in FIG. 7.

FIG. 10 illustrates the result of simulation of stability with respect to the ratio between a winding resistance value R2 of the second motor 42 and a winding resistance value R1 of the first motor 41, in other words, the ratio of the winding resistance value R2 of the second motor 42 to the winding resistance value R1 of the first motor 41. Hereinafter, the value of "R2/R1", which is the ratio between the winding resistance value R2 and the winding resistance value R1, may also be referred to as an "R ratio". Note that the R ratio may be referred to as a "first ratio". FIG. 10 shows that stable operation is achieved with an R ratio of 2.4 or more.

In general, the winding resistance values of motors involve errors of about ±5% due to manufacturing variations. Therefore, the R ratio for stabilizing the operation of the second motor 42 is preferably determined in consideration of errors stemming from manufacturing variations. FIG. 11 illustrates, in order from the top, the median (R2_mid) of the winding resistance value R2 of the second motor 42, the lower limit (R2_min) of the winding resistance value R2 of the second motor 42, the upper limit (R1_max) of the winding resistance value R1 of the first motor 41, and the median (R1_mid) of the winding resistance value R1 of the first motor 41.

In FIG. 11, the lower limit R2_min of the winding resistance value R2 is a value 5% smaller than the median R2_mid, that is, a value obtained by multiplying the median R2_mid by 0.95. The upper limit R1_max of the winding resistance value R1 is a value 5% larger than the median R1_mid, that is, a value obtained by multiplying the median R1_mid by 1.05. As illustrated in FIG. 10, stable operation is achieved with an R ratio of 2.4 or more. Therefore, a preferable range of R ratio in which errors from manufacturing variations are taken into consideration is 2.7 (≈2.4×(1.05/0.95)) or more. That is, by setting the winding resistance value R2 of the second motor 42 to 2.7 times or more the winding resistance value R1 of the first motor 41, it is possible to stably drive the second motor 42 even with manufacturing variations.

Note that possible methods of increasing the winding resistance value of the second motor 42 include reducing the wire diameter of the winding, increasing the number of turns of the winding, and the like. In addition, the same effect can also be obtained by increasing the wiring length of the wiring from the inverter 4 to the second motor 42 or reducing the wiring diameter of the wiring. The feature of the first embodiment is to increase the R ratio, and the same effect can also be obtained by reducing a resistance value associated with the first motor 41.

As described above, the load driving apparatus according to the first embodiment includes the first motor that is the reference motor driven by vector control and the second motor driven by a common voltage, and the first ratio between the first motor and the second motor, namely the ratio of the winding resistance value of the second motor to the winding resistance value of the first motor, is set to 2.4 or more. As a result, the operation of the second motor, which is not driven by vector control, is stabilized. Thus, in the configuration that performs position sensorless drive of a plurality of motors with one inverter, it is possible to stably drive the plurality of motors with reducing or preventing an increase in apparatus size or complicated control.

Note that it is more preferable that the above-described first ratio be set to 2.7 or more. Setting the first ratio to 2.7 or more contributes to eliminating the influence of manufacturing variations.

### Second Embodiment.

The first embodiment has described the load driving apparatus in which the second motor 42 has a winding resistance value different from that of the first motor 41, which is the reference motor. The second embodiment describes a load driving apparatus in which the second motor 42 has an induced voltage constant value different from that of the first motor 41, which is the reference motor.

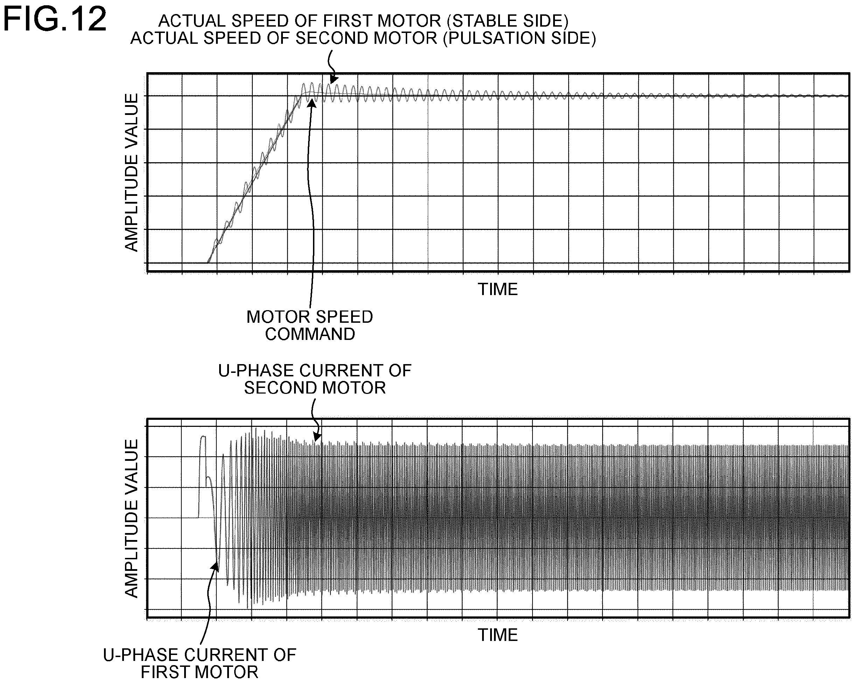

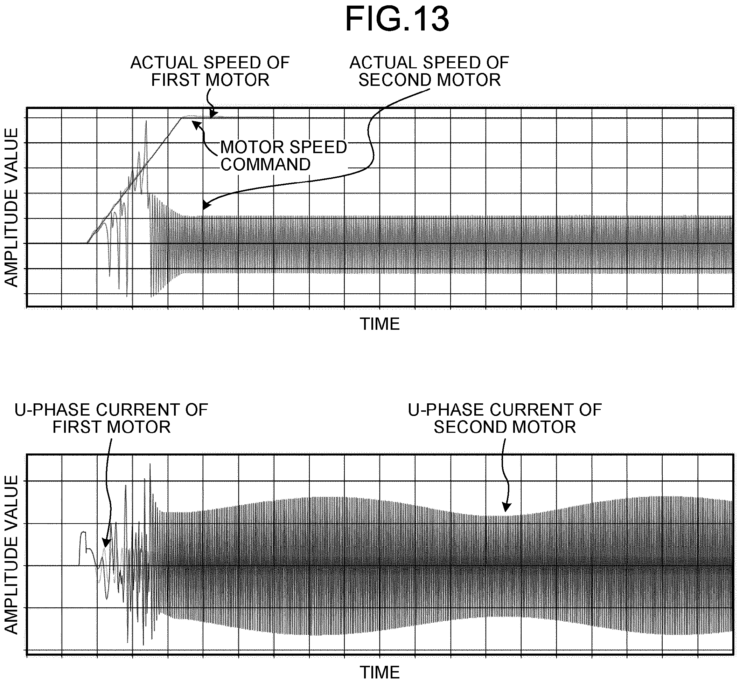

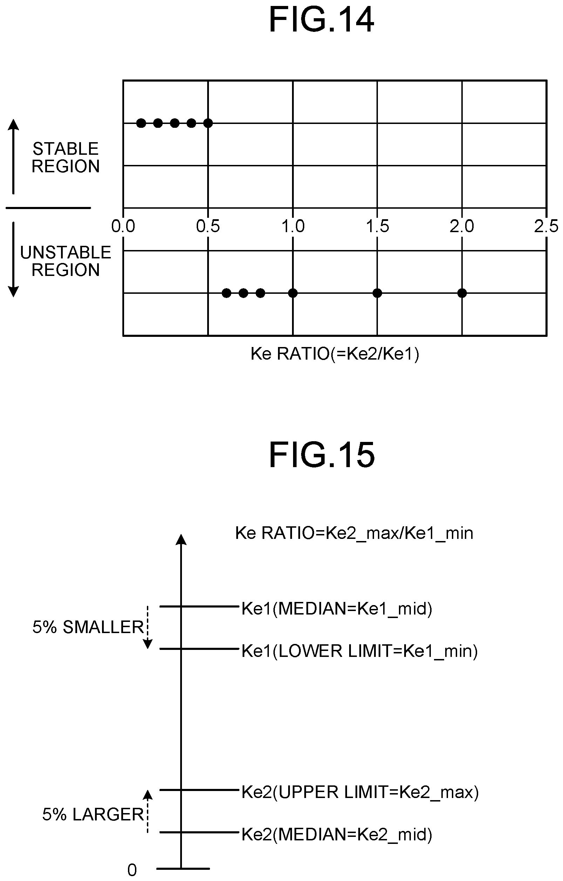

FIG. 12 is a diagram for explaining the behavior of the load driving apparatus according to the second embodiment. FIG. 13 is a third diagram illustrating a pulsation phenomenon of the second motor that can occur in the load driving apparatus having the configuration illustrated in FIG. 1. FIG. 14 is a first diagram for explaining operation parameters for stabilizing the operation of the load driving apparatus according to the second embodiment. FIG. 15 is a second diagram for explaining operation parameters for stabilizing the operation of the load driving apparatus according to the second embodiment.

Motors that are widely used for outdoor unit fans of air conditioners have an induced voltage constant value of about several hundred [mV/(rad/s)], for example. Induced voltage constant value is a type of motor physical constant. When the first motor 41 and the second motor 42 have the same induced voltage constant value, a pulsation phenomenon occurs as illustrated in FIG. 7. In contrast to FIG. 7, FIG. 12 illustrates operation waveforms in the case that the induced voltage constant value of the second motor 42 is set to 0.5 times the induced voltage constant value of the first motor 41. It can be seen that the operation of the first motor 41 and the second motor 42 in FIG. 12 is more stable than that in FIG. 7. It can also be seen that the actual speed of the second motor 42 slightly pulsates as the motor speed command changes, but stably transitions with the lapse of time.

FIG. 13 illustrates operation waveforms in the case that the induced voltage constant value of the second motor 42 is set to 2.0 times the induced voltage constant value of the first motor 41. In comparison with FIG. 7, the pulsations of speed and current in the second motor 42 occur during acceleration after the motor is started, which means that the operation is less stable than that in FIG. 7.

FIG. 14 illustrates the result of simulation of stability with respect to the ratio between an induced voltage constant value Ke2 of the second motor 42 and an induced voltage constant value Ke1 of the first motor 41, in other words, the ratio of the induced voltage constant value Ke2 of the second motor 42 to the induced voltage constant value Ke1 of the first motor 41. Hereinafter, the value of "Ke2/Ke1", which is the ratio between the induced voltage constant value Ke2 and the induced voltage constant value Ke1, may also be referred to as a "Ke ratio". Note that the Ke ratio may be referred to as a "second ratio". FIG. 14 shows that stable operation is achieved with a Ke ratio of 0.5 or less.

In general, the induced voltage constant values of motors involve errors of about ±5% due to manufacturing variations. Therefore, the Ke ratio for stabilizing the operation of the second motor 42 is preferably determined in consideration of errors from manufacturing variations. FIG. 15 illustrates, in order from the top, the median (Ke1_mid) of the induced voltage constant value Ke1 of the first motor 41, the lower limit (Ke1_min) of the induced voltage constant value Ke1 of the first motor 41, the upper limit (Ke2_max) of the induced voltage constant value Ke2 of the second motor 42, and the median (Ke2_mid) of the induced voltage constant value Ke2 of the second motor 42.

In FIG. 15, the lower limit Ke1_min of the induced voltage constant value Ke1 is a value 5% smaller than the median Ke1_mid, that is, a value obtained by multiplying the median Ke1_mid by 0.95. The upper limit Ke2_max of the induced voltage constant value Ke2 is a value 5% larger than the median Ke2_mid, that is, a value obtained by multiplying the median Ke2_mid by 1.05. As illustrated in FIG. 14, stable operation is achieved with a Ke ratio of 0.5 or more. Therefore, a preferable range of Ke ratio in which errors from manufacturing variations are taken into consideration is 0.45 (≈0.5×(0.95/1.05)) or less. That is, by setting the induced voltage constant value Ke2 of the second motor 42 to 0.45 times or less the induced voltage constant value Ke1 of the first motor 41, it is possible to stably drive the second motor 42 even with manufacturing variations.

Note that possible methods of reducing the induced voltage constant value of the second motor 42 include changing the type of magnet material of the stator, changing the size of the magnet material of the stator, and the like. The feature of the second embodiment is to reduce the Ke ratio, and the same effect can also be obtained by increasing an induced voltage constant associated with the first motor 41.

As described above, the load driving apparatus according to the second embodiment includes the first motor that is the reference motor driven by vector control and the second motor driven by a common voltage, and the second ratio between the first motor and the second motor, namely the ratio of the induced voltage constant value of the second motor to the induced voltage constant value of the first motor, is set to 0.5 or less. As a result, the operation of the second motor, which is not driven by vector control, is stabilized. Thus, in the configuration that performs position sensorless drive of a plurality of motors with one inverter, it is possible to stably drive the plurality of motors with reducing or preventing an increase in apparatus size or complicated control.

Note that it is more preferable that the above-described second ratio be set to 0.45 or less. Setting the second ratio to 0.45 or less contributes to eliminating the influence of manufacturing variations.

### Third Embodiment.

The second embodiment has described the load driving apparatus in which the second motor 42 has an induced voltage constant value different from that of the first motor 41, which is the reference motor. The third embodiment describes a load driving apparatus in which the second motor 42 has an inductance value different from that of the first motor 41, which is the reference motor.

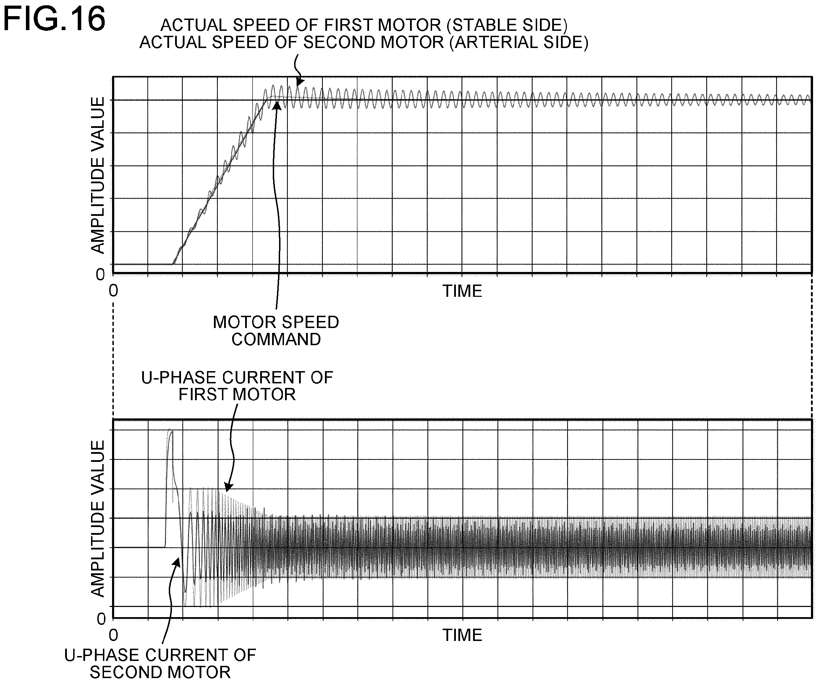

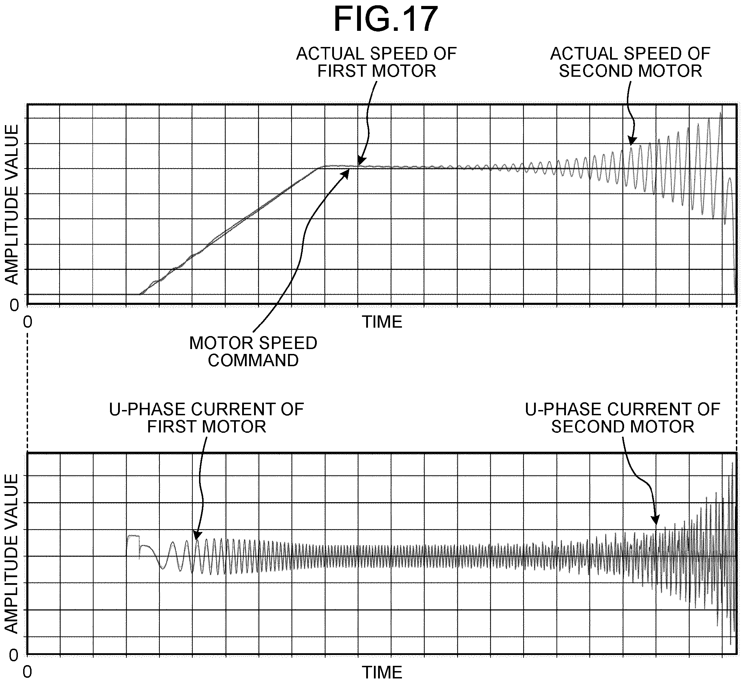

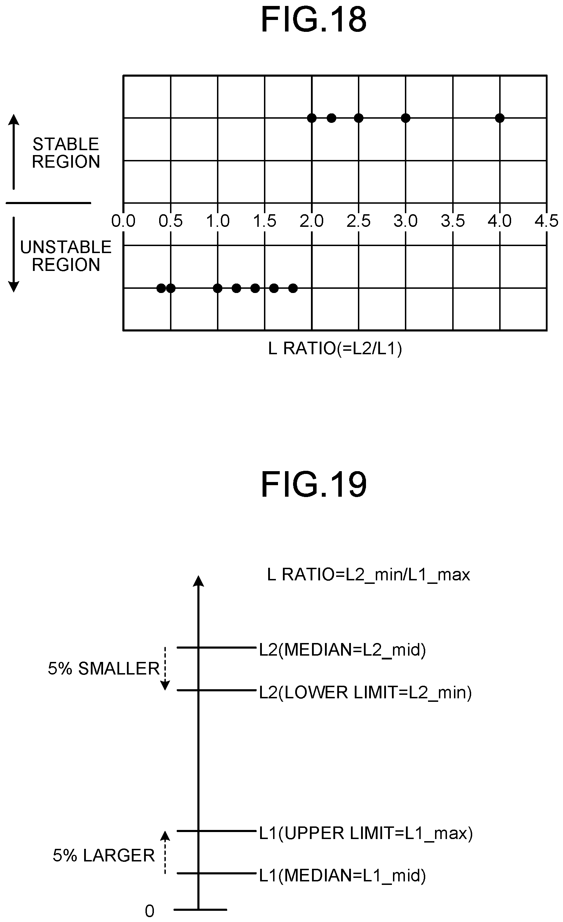

FIG. 16 is a diagram for explaining the behavior of the load driving apparatus according to the third embodiment. FIG. 17 is a fourth diagram illustrating a pulsation phenomenon of the second motor that can occur in the load driving apparatus having the configuration illustrated in FIG. 1. FIG. 18 is a first diagram for explaining operation parameters for stabilizing the operation of the load driving apparatus according to the third embodiment. FIG. 19 is a second diagram for explaining operation parameters for stabilizing the operation of the load driving apparatus according to the third embodiment.

Motors that are widely used for outdoor unit fans of air conditioners have an inductance value of about several tens [mH], for example. Inductance value is a type of motor physical constant. When the first motor 41 and the second motor 42 have the same inductance value, a pulsation phenomenon occurs as illustrated in FIG. 7. In contrast to FIG. 7, FIG. 16 illustrates operation waveforms in the case that the inductance value of the second motor 42 is set to 2.0 times the inductance value of the first motor 41. It can be seen that the operation of the first motor 41 and the second motor 42 in FIG. 16 is more stable than that in FIG. 7. It can also be seen that the actual speed of the second motor 42 slightly pulsates as the motor speed command changes, but stably transitions with the lapse of time.

FIG. 17 illustrates operation waveforms in the case that the inductance value of the second motor 42 is set to 0.5 times the inductance value of the first motor 41. In comparison with FIG. 7, the pulsations of speed and current in the second motor 42 occur earlier than in FIG. 7, which means that the operation is less stable than that in FIG. 7.

FIG. 18 illustrates the result of simulation of stability with respect to the ratio between an inductance value L2 of the second motor 42 and an inductance value L1 of the first motor 41, in other words, the ratio of the inductance value L2 of the second motor 42 to the inductance value L1 of the first motor 41. Hereinafter, the value of "L2/L1", which is the ratio between the inductance value L2 and the inductance value L1, may also be referred to as an "L ratio". Note that the L ratio may be referred to as a "third ratio". FIG. 18 shows that stable operation is achieved with an L ratio of 2.0 or more.

In general, the inductance values of motors involve errors of about ±5% due to manufacturing variations. Therefore, the L ratio for stabilizing the operation of the second motor 42 is preferably determined in consideration of errors from manufacturing variations. FIG. 19 illustrates, in order from the top, the median (L2_mid) of the inductance value L2 of the second motor 42, the lower limit (L2_min) of the inductance value L2 of the second motor 42, the upper limit (L1_max) of the inductance value L1 of the first motor 41, and the median (L1_mid) of the inductance value L1 of the first motor 41.

In FIG. 19, the lower limit L2_min of the inductance value L2 is a value 5% smaller than the median L2_mid, that is, a value obtained by multiplying the median L2_mid by 0.95. The upper limit L1_max of the inductance value L1 is a value 5% larger than the median L1_mid, that is, a value obtained by multiplying the median L1_mid by 1.05. As illustrated in FIG. 18, stable operation is achieved with an L ratio of 2.0 or more. Therefore, a preferable range of L ratio in which errors from manufacturing variations are taken into consideration is 2.2 (≈2.0×(1.05/0.95)) or less. That is, by setting the inductance value L2 of the second motor 42 to 2.2 times or more the inductance value L1 of the first motor 41, it is possible to stably drive the second motor 42 even with manufacturing variations.

Note that possible methods of increasing the inductance value of the second motor 42 include changing the shape of the stator or the rotor, increasing the number of turns of the motor winding, and the like. The feature of the third embodiment is to increase the L ratio, and the same effect can also be obtained by reducing an inductance value associated with the first motor 41.

As described above, the load driving apparatus according to the third embodiment includes the first motor that is the reference motor driven by vector control and the second motor driven by a common voltage, and the third ratio between the first motor and the second motor, namely the ratio of the inductance value of the second motor to the inductance value of the first motor, is set to 2.0 or more. As a result, the operation of the second motor, which is not driven by vector control, is stabilized. Thus, in the configuration that performs position sensorless drive of a plurality of motors with one inverter, it is possible to stably drive the plurality of motors with reducing or preventing an increase in apparatus size or complicated control.

Note that it is more preferable that the above-described third ratio be set to 2.2 or more. Setting the third ratio to 2.2 or more contributes to eliminating the influence of manufacturing variations.

### Fourth Embodiment.

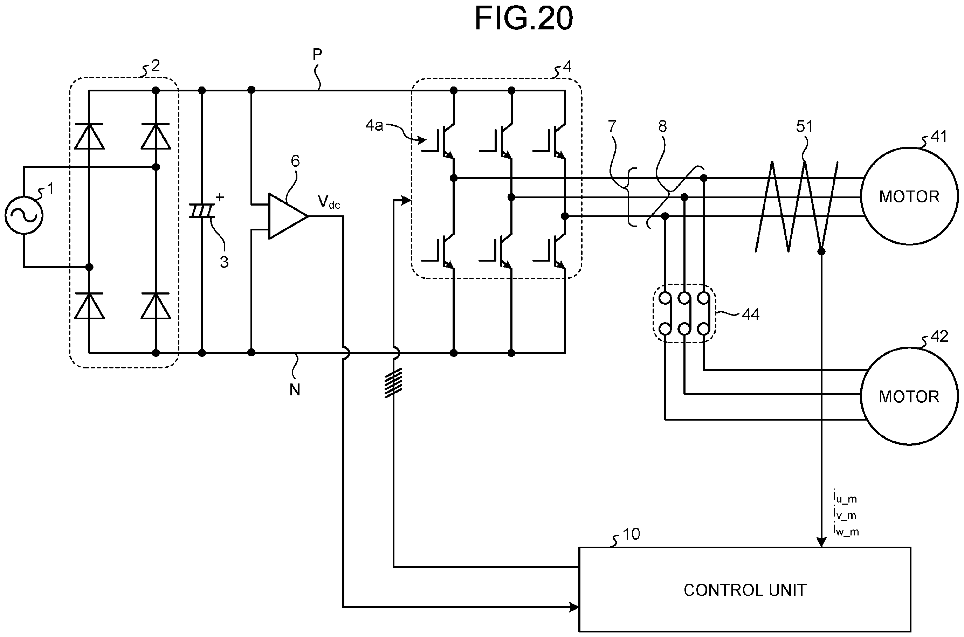

The fourth embodiment describes a case where the load driving apparatus described in the first to third embodiments is applied to motors for outdoor unit fans of an air conditioner, such as the one illustrated in FIG. 12. FIG. 20 is a diagram illustrating an exemplary configuration of the load driving apparatus according to the fourth embodiment.

To begin with, in order to improve the energy saving performance of air conditioners, it is desired to increase the efficiency of inverters and motors. Here, a preferable implementation for increasing the efficiency of motors is to reduce the winding resistance value and increase the induced voltage constant. In addition, a preferable implementation for the case that indoor temperature is stabilized as the heat insulation performance of buildings or houses is improved is to operate in energy saving mode in which the air volume of the outdoor unit fans is reduced and the amount of heat exchange is lowered. Thus, air conditioners having these characteristics and functions have been widely used.

In view of this, the load driving apparatus according to the fourth embodiment includes a relay circuit 44 between the branch point 8 and the second motor 42 as illustrated in FIG. 20. The relay circuit 44 is a switch that opens and closes the electrical connection between the inverter 4 and the second motor 42. Even when the relay circuit 44 is turned off, the electrical connection between the inverter 4 and the first motor 41 is maintained. Note that the configuration in FIG. 20 is the same as that of the load driving apparatus according to the first embodiment illustrated in FIG. 1, except for the relay circuit 44. The same components are denoted by the same reference signs, and redundant description is omitted.

In the load driving apparatus according to the fourth embodiment, the first motor 41 can be driven alone by turning off the relay circuit 44. As the first motor 41, a motor having a low resistance and a high induced voltage constant is used, with emphasis on motor efficiency. In addition, as the second motor 42, a motor having a high resistance, a low induced voltage constant, or a high inductance is used, with emphasis on stability during parallel driving.

According to the fourth embodiment, only the highly efficient first motor 41 is driven in energy saving mode in which the air volume of the fans is lowered. When a large air volume is required, the relay circuit 44 is turned on so that the two fans operate in parallel. As a result, an air conditioner having energy saving performance and high output performance can be implemented at low cost.

### Fifth Embodiment.

The fifth embodiment describes a method for operating a load driving apparatus. The method according to the fifth embodiment is a method for making the second motor 42 have a motor physical constant value different from that of the first motor 41 through energization to the second motor 42 before the load driving apparatus is operated.

As a material of the permanent magnets in the first motor 41 and the second motor 42, neodymium may be used, which is an example of a rare earth magnet. Neodymium is a material whose magnetic force decreases as the temperature increases. In the case of using neodymium, as the temperature of the motor increases, the winding resistance value increases and the induced voltage constant decreases. This means, when viewed in light of the first to fourth embodiments, that stability during motor parallel driving increases as the temperature of the motor increases. In view of this, in the fifth embodiment, before the motors are driven in parallel, control is performed to increase the temperature of the second motor 42 by performing DC energization or high-frequency energization on the second motor 42. DC energization is a method of increasing the temperature of a motor due to copper loss of the motor caused by a flow of DC current to the motor. High-frequency energization is a method of increasing the temperature of the motor due to iron loss of the motor caused by a flow of high-frequency current to the motor.

DC energization and high-frequency energization are known as disclosed in, for example, Japanese Patent No. 4931970 or Japanese Patent No. 5937619, and will not be described in any further detail. Note that the contents of the publications are incorporated in the present specification and form a part of the present specification.

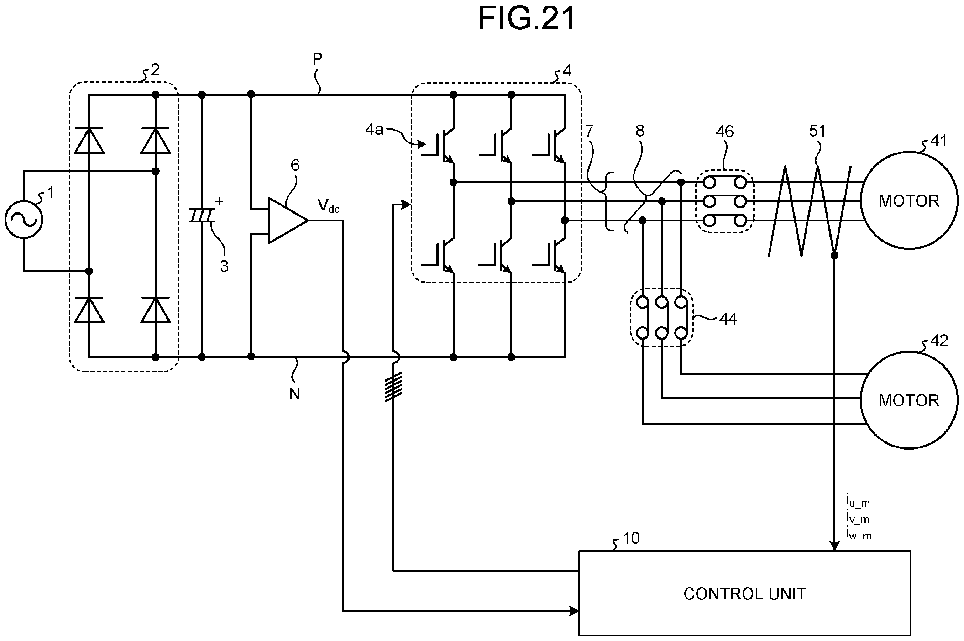

FIG. 21 is a diagram illustrating an exemplary configuration of the load driving apparatus according to the fifth embodiment. As illustrated in FIG. 21, the load driving apparatus according to the fifth embodiment includes a relay circuit 46 between the branch point 8 and the first motor 41. The relay circuit 46 is a switch that opens and closes the electrical connection between the inverter 4 and the first motor 41. Even when the relay circuit 46 is turned off, the electrical connection between the inverter 4 and the second motor 42 is maintained. Note that the configuration in FIG. 21 is the same as that of the load driving apparatus according to the first embodiment illustrated in FIG. 20, except for the relay circuit 46. The same components are denoted by the same reference signs, and redundant description is omitted. In the case of the load driving apparatus according to the fifth embodiment, the relay circuit 44 can be omitted.

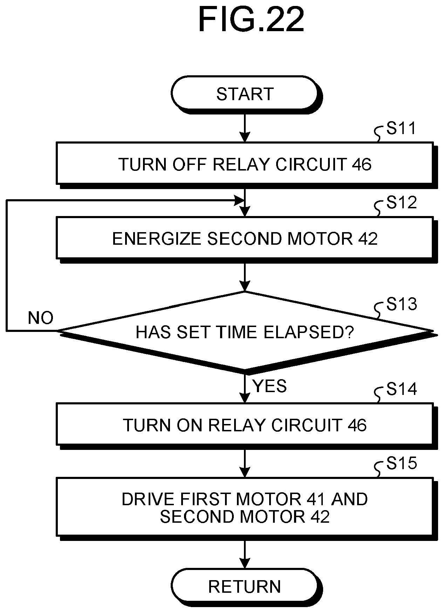

FIG. 22 is a flowchart for explaining the method for operating the load driving apparatus according to the fifth embodiment. The procedure of FIG. 22 is performed under the control of the control unit 10. In addition, the procedure of FIG. 22 may be invoked and performed at the time of activation of the load driving apparatus, or may be invoked and performed during the operation of the load driving apparatus.

The control unit 10 turns off the relay circuit 46 (step S11). Accordingly, the electrical connection between the inverter 4 and the first motor 41 is released. Next, the control unit 10 operates the inverter 4 to energize the second motor 42 (step S12). The control unit 10 determines whether the set time has elapsed (step S13). In response to determining that the set time has not elapsed (step S13: No), step S12 is repeated. In response to determining that the set time has elapsed (step S13: Yes), the procedure proceeds to step S14. The control unit 10 turns on the relay circuit 46 (step S14). Accordingly, the first motor 41 is electrically connected to the inverter 4. Then, the control unit 10 operates the inverter 4 to drive the first motor 41 and the second motor 42 (step S15). Thereafter, the procedure returns to the invoked process.

By invoking and performing the procedure of FIG. 22, only the second motor 42 is heated, and the temperature of the second motor 42 increases relative to the first motor 41. This makes the second motor 42 have a motor physical constant value different from that of the first motor 41. As a result, the second motor 42, which is not vector-controlled, can be stably driven.

Note that the above-described case in which a rare earth magnet such as neodymium is used as a material of the permanent magnet synchronous motors is a non-limiting example. A rare earth magnet may not be used, and still the winding resistance value increases with an increase in temperature. Therefore, the method according to the fifth embodiment is also applicable to motors that are not permanent magnet synchronous motors.

The configurations described in the above-mentioned embodiments indicate examples of the contents of the present invention. The configurations can be combined with another well-known technique, and some of the configurations can be omitted or changed in a range not departing from the gist of the present invention.

### Reference Signs List

1 AC power supply; 2 rectifier; 3 smoothing unit; 4 inverter; 4a switching element; 6 input voltage detection unit; 7 power line; 8 branch point; 10 control unit; 11, 19 coordinate conversion unit; 13 motor speed estimation unit; 15 integrator; 17 motor control unit; 20 PWM signal generation unit; 41 first motor; 42 second motor; 41a, 42a fan; 44, 46 relay circuit; 51 current detection unit; 70 outdoor unit; 100 air conditioner; 300 processor; 302 memory; 304 interface; 305 processing circuitry.

## Claims

1. A load driving apparatus comprising:
a plurality of motors each of which driving corresponding one of a plurality of loads;
a single inverter applying a common voltage to the plurality of the motors; and
a control unit performing vector control on a first motor which is one of the plurality of the motors and is a reference motor, wherein
a second motor which is other than the first motor is driven by the common voltage, and
a first ratio is 2.4 or more, the first ratio being a ratio of a winding resistance value of the second motor to a winding resistance value of the first motor.

2. The load driving apparatus according to claim 1, wherein
the first ratio is 2.7 or more.

3. A load driving apparatus comprising:
a plurality of motors each of which driving a corresponding one of a plurality of loads;
a single inverter applying a common voltage to the plurality of the motors; and
a control unit performing vector control on a first motor which is one of the plurality of the motors and is a reference motor, wherein
a second motor which is other than the first motor is driven by the common voltage, and
a second ratio is 0.5 or less, the second ratio being a ratio of an induced voltage constant value of the second motor to an induced voltage constant value of the first motor.

4. The load driving apparatus according to claim 3, wherein
the second ratio is 0.45 or less.

5. A load driving apparatus comprising:
a plurality of motors each of which driving a corresponding one of a plurality of loads;
a single inverter applying a common voltage to the plurality of the motors; and
a control unit performing vector control on a first motor which is one of the plurality of the motors and is a reference motor, wherein
a second motor which is other than the first motor is driven by the common voltage, and
a third ratio is 2.0 or more, the third ratio being a ratio of an inductance value of the second motor to an inductance value of the first motor.

6. The load driving apparatus according to claim 5, wherein
the third ratio is 2.2 or more.

7. The load driving apparatus according to any one of claims 1 to 6, further comprising
a switch opening and closing an electrical connection between the inverter and the second motor.

8. An air conditioner comprising the load driving apparatus according to any one of claims 1 to 7.

9. A method for operating a load driving apparatus, the load driving apparatus including: a plurality of motors each of which driving a corresponding one of a plurality of loads; a single inverter applying a common voltage to the plurality of the motors; and a control unit performing vector control on a first motor which is one of the plurality of the motors and is a reference motor, a second motor which is other than the first motor being driven by the common voltage, the method comprising:
a first step of causing the second motor to have a motor physical constant value different from a motor physical constant value of the first motor through energization to the second motor; and
a second step of driving the first motor and the second motor after the first step.
